# EUROPÄISCHE PATENTSCHRIFT

(11) **EP 2 479 470 B1**
(45) Veröffentlichungstag und Bekanntmachung des Hinweises auf die Patenterteilung: **02.03.2016**
(21) Anmeldenummer: 12160559.6
(22) Anmeldetag: 03.06.2009
(51) Int. Cl.: B60T 17/04, F16L 37/088

(54) **Steckkupplung für Druckmittel-Leitungen**
Coupling for pressure lines
Raccord enfichage pour conduites d'agent sous pression

(30) Priorität: 14.07.2008 DE 202008009398 U; 14.07.2008 DE 202008009399 U
(43) Veröffentlichungstag der Anmeldung: 25.07.2012
(62) Teilanmeldung aus: 09779618.9
(73) Patentinhaber: Voss Automotive GmbH, 51688 Wipperfürth (DE)
(72) Erfinder: Lechner, Martin, 51789 Lindlar (DE); Schwarzkopf, Otfried, 51515 Kürten (DE); Hagen, Harald, 51688 Wipperfürth (DE); Suhr, Andreas, 51789 Lindlar (DE)
(74) Vertreter: Patentanwälte Dr. Solf & Zapf

(56) Entgegenhaltungen:
- EP-A1- 0 751 332
- EP-A1- 1 770 320
- EP-A2- 0 810 399

## Beschreibung

Die vorliegende Erfindung betrifft gemäß dem Oberbegriff des Anspruchs 1 eine Steckkupplung für Druckmittel-Leitungen, bestehend aus zwei Kupplungsteilen, und zwar aus einem Gehäuseteil und einem Steckerteil, wobei das Steckerteil mit einem Steckerschaft umfangsgemäß abgedichtet in eine Aufnahmeöffnung des Gehäuseteils einsteckbar und über eine Verriegelungseinrichtung gegen Lösen arretierbar ist, wobei die Verriegelungseinrichtung derart ausgebildet ist, dass eine teilgesteckte Vorraststellung und eine ganz gesteckte Vollraststellung gewährleistet sind, wobei in der Vorraststellung eine unvollständige, eine Leckage des Druckmittels ermöglichende Abdichtung des Steckerschaftes in der Aufnahmeöffnung vorliegt, während in der Vollraststellung eine vollständige Abdichtung gegeben ist, wobei die Verriegelungseinrichtung einerseits aus einer radialen, nutförmigen, von einer Halteflanke und einer

Übergangsflanke begrenzten Vorrastausnehmung sowie einer der Übergangsflanke in Einsteckrichtung nachgeordneten Vollraststufe des einen Kupplungsteils und andererseits aus einem radial federelastischen Rastelement des anderen Kupplungsteils besteht, so dass beim Einstecken des Steckerschaftes in die Aufnahmeöffnung das Rastelement durch radiale Bewegung zunächst in der Vorraststellung radial in die Vorrastausnehmung einrastet und dabei die Halteflanke hintergreift und bei fortgesetztem Einstecken über die Übergangsflanke radial aus der Vorrastausnehmung verdrängt und in die die Vollraststufe radial hintergreifende Vollraststellung überführt wird.

Solche Steckkupplungen werden insbesondere in Kraftfahrzeug-Bremssystemen, hauptsächlich bei LKW-Luftdruckbremsanlagen; eingesetzt Hierbei besteht das Problem, dass in manchen Fällen, vor allem bei ungünstigen Platzverhältnissen bzw. Einbausituationen, vom Monteur beim Stecken nicht sorgfältig genug auf ein korrektes, vollständiges Stecken geachtet wird, so dass in der Praxis Prüfvorgänge eingeschaltet werden müssen, um zu verhindern, dass beim Aufbau des vollen Bremsdruckes die Steckkupplung, plötzlich ungewollt getrennt wird. Dieser Fall könnte beispielsweise auftreten, wenn das Steckerteil über einen zur Abdichtung vorhandenen Dichtring (O-Ring) kraftschlüssig gehalten, das Rastelement aber noch nicht eingerastet ist.

Durch die EP 0 226 689 B1 ist eine Steckkupplung der beschriebenen, gattungsgemäßen Art bekannt geworden, bei der zur Vermeidung der beschriebenen Probleme schon im noch nicht ganz korrekt gesteckten Zustand der Kupplungsteile eine "Vorrastung" gewährleistet ist, die es verhindert, dass bei voller Druckbeaufschlagung die Kupplung ganz getrennt wird. Dabei ist in dieser Vorraststellung eine Undichtigkeit derart gewährleistet, dass dieser Zustand z. B. akustisch durch ein Leckagegeräusch wahrnehmbar ist, ohne dass es zu einem vollständigen, plötzlichen Druckabfall durch vollständiges Trennen der Kupplungsteile kommen kann. Die Kupplung kann dann bei Auftreten des Leckagegeräusches weiter in die korrekt abgedichtete und arretierte "Vollraststellung" überführt werden. Bei der bekannten Kupplungsvorrichtung ist ein aus im Querschnitt kreisförmigem Federdraht gebogener Verriegelungsring nach Art eines Drahtsprengringes vorgesehen, der in einer ersten Ausführungsform in einer Aussparung des Gehäuseteils, dort "Mutterstück" genannt, angeordnet ist und für Vor- und Vollraststellung nacheinander mit zwei separaten, ringnutförmigen Ausnehmungen des Steckerteils, dort "Gegenstück" genannt, zusammenwirkt. In einer zweiten Ausführungsform ist der Verriegelungsring auf dem Stecker (Gegenstück) angeordnet und wirkt mit zwei ringnutförmigen Aussparungen im Gehäuseteil (Mutterstück) zusammen.

Außerdem sind auch andere, nicht gattungsgemäße Steckkupplungen bekannt, die zwar auch für eine "Doppelrastung" bzw. Zweifach-Rastung in einer Vorraststellung und einer Vollraststellung ausgelegt sind, allerdings nach anderen Funktionsprinzipien.

Beispielsweise beschreibt die FR 2 511 115 A1 eine solche Steckkupplung (Figuren 7 bis 9), die im Gehäuseteil zwei axial hintereinander liegende, als schieberartige und federbelastete Riegel ausgebildete Rastelemente aufweist, die beim Einstecken des Steckers nacheinander ein und dieselbe Raststufe des Steckerschaftes hintergreifen. Die zwei beweglichen Rastelemente führen zu einem höheren konstruktiven Aufwand und zu einer großen Baulänge der Kupplung.

Auch in den weiteren Dokumenten EP 0 748 975 B1, EP 0 766 033 B1, EP 0 810 399 B1, EP 0 813 017 B1 und EP 0 913 618 B1 sind weitere unterschiedliche Ausführungen von Steckkupplungen beschrieben, die jeweils zwei Rastelemente im Gehäuse oder am Stecker aufweisen, die mit derselben Raststufe des jeweils anderen Kupplungsteils nacheinander in der Vorraststellung und in der Vollraststellung zusammenwirken.

Das Dokument EP 0 751 332 A1 beschreibt zwar eine weitere Steckkupplung mit "Doppelrastung", die aber ebenfalls insofern nicht gattungsgemäß ist, als für die Verrastung keine nutförmige, radiale Vorrastausnehmung vorhanden ist. Dadurch fehlt auch eine Übergangsflanke im gattungsgemäßen Sinne, über die das radial federelastische Rastelement nach einem Einrasten in der Vorraststellung radial aus der Vorrastausnehmung verdrängt werden würde. Stattdessen ist bei dieser bekannten Steckkupplung innerhalb der Auffnahmeöffnung des Gehäuseteils lediglich eine die Aufnahmeöffnung erweiternde erste Raststufe gebildet, an die sich über eine zylindrische Innenfläche eine die Aufnahmeöffnung nochmals erweiternde zweite Raststufe anschließt. Das Steckerteil trägt auf seinem Steckerschaft ein radial elastisch verformbares Halteelement, welches zumindest für die Vorraststellung vorgesehen ist und dazu rastend mit der ersten Raststufe zusammenwirkt. Durch diese Ausgestaltung ist allerdings in der Vorraststellung nur eine sehr geringe radiale Flächenüberdeckung zwischen dem Halteelement und der ersten Raststufe vorhanden, so dass in der Vorraststellung nur eine entsprechend geringe axiale Haltekraft gewährleistet ist, und zwar im Vergleich zu einer gattungsgemäßen nutförmigen Vorrastausnehmung, weil durch eine solche Vorrastausnehmung auch die der Vorraststellung zugeordnete Halteflanke flächenmäßig vergrößert wird.

Derartige Steckkupplungen des Prinzips "Doppelrastung" haben sich im praktischen Einsatz recht gut bewährt. Speziell bei der gattungsgemäßen Ausführung mit nur einem Rastelement, die wegen des vorteilhaft geringen Aufwands häufig bevorzugt wird, sind aber bei der praktischen Anwendung Fälle aufgetreten, wobei es bei oder nach dem Stecken teilweise doch zu einem ungewollten gänzlichen Lösen des Steckerteils gekommen ist. Außerdem gibt es heute zum Teil eine anwenderspezifische Forderung, dass in der Vorraststellung das Druckmittelsystem grundsätzlich arbeitsfähig sein muss, und zwar trotz der Leckage (die daher möglichst gering, aber noch detektierbar sein soll). Dies bedeutet, dass die Steckkupplung geeignet sein muss, auch schon in der Vorraststellung mit Betriebsdruck beaufschlagt werden zu können, wobei die Kupplungsteile auch mit hoher Sicherheit gegen druckbedingtes Lösen von der Vorraststellung in die Vollraststellung zu überführen sein müssen.

Der vorliegenden Erfindung liegt daher die Aufgabe zu Grunde, eine Steckkupplung der speziellen gattungsgemäßen Art so zu verbessern, dass eine noch weitergehend erhöhte Sicherheit gegen vollständiges Lösen des Steckerteils gewährleistet werden kann. Zudem soll dabei die Steckkupplung weiterhin auf Grund nur eines Rastelementes konstruktiv einfach sein und eine kurze Baulänge aufweisen.

Erfindungsgemäß wird dies gemäß dem Anspruch 1 dadurch erreicht, dass die Vollraststufe zumindest im Eingriffsbereich des Rastelementes derart um einen radialen Versatz gegenüber der Halteflanke der Vorrastausnehmung versetzt ist, dass während der Einsteckbewegung beim Überführen zwischen Vor- und Vollraststellung zwischen dem Rastelement und der Halteflanke der Vorrastausnehmung stets eine radiale Überdeckung gewährleistet bleibt.

Die Erfindung beruht auf der Erkenntnis, dass bei Steckkupplungen der bekannten, gattungsgemäßen Art beim Überführen des Steckerteils von der Vorraststellung in die Vollraststellung das Rastelement so weit radial aus der Vorrastausnehmung bewegt wird, dass im Falle einer eventuellen unabsichtlichen Freigabe des Steckerteils dieses auf Grund einer insbesondere druckbedingten Beschleunigung sehr schnell in Löserichtung bewegt werden kann, so dass das Rastelement so schnell nicht wieder radial in der Vorraststellung einrasten kann. Der Stecker "schießt" praktisch über die Vorraststellung hinaus und löst sich vollständig aus dem Gehäuseteil.

Durch die Erfindung wird demgegenüber erreicht, dass das Rastelement beim Überführen von der Vorraststellung in die Vollraststellung zwar radial aus der Vorrastausnehmung hinausbewegt, dabei aber nicht so weit radial bewegt wird, wie beim anfänglichen Einstecken des Steckerteils bis zum Hinterrasten der Halteflanke der Vorrastausnehmung Deshalb besteht auch während des Überführens aus der Vorraststellung in die Vollraststellung stets eine zumindest geringfügige radiale Flächen-Überdeckung zwischen dem Rastelement und der Halteflanke der Vorrastausnehmung. Daraus resultiert eine deutlich erhöhte Sicherheit gegen vollständiges Lösen, auch wenn bei schon vorhandenem Druckmittel-Systemdruck das Steckerteil beim Steckvorgang dann losgelassen werden sollte, wenn das Rastelement bereits die Vorrastausnehmung verlassen, aber noch nicht die Vollraststufe hinterrastet halt; in diesem Fall würde der Stecker jedenfalls durch den aus dem erfindungsgemäßen Versatz resultierenden Überdeckungsbereich zwischen dem Rastelement und der Halteflanke der Vorrastausnehmung gehalten ("gefangen") werden.

Die geschilderten Probleme könnten zwar vielleicht auch dadurch reduziert werden, dass die Raststufen axial weiter voneinander beabstandet werden, um in Verbindung mit der radialen Federkraft des Rastelementes (so genannte "Schnappigkeit") ein Einrasten in die Vorrastausnehmung sicherzustellen, wenn das Steckerteil zu früh, d. h. schon vor dem Hinterrasten der Vollraststufe, freigegeben werden sollte. Dies würde aber zu einer nachteiligen Vergrößerung der Baulänge der Steckkupplung führen. Ebenso könnte eine stärkere radiale Federkraft des Rastelementes gewählt werden, was aber nachteilige Auswirkungen auf die für den Steckvorgang aufzubringende Steckkraft hätte.

Im Gegensatz dazu können durch die Erfindung sowohl die Baulänge als auch die Steckkräfte vorteilhaft gering gehalten werden.

Im Rahmen der Erfindung sind hinsichtlich der Anordnung des Rastelementes beide Ausführungsvarianten möglich, wie sie auch in dem nächstkommenden Dokument EP 0 226 689 B1 enthalten sind. So kann das Rastelement wahlweise innerhalb der Aufnahmeöffnung des Gehäuseteils oder am Steckerschaft gelagert sein. Bei der ersten Variante mit innerhalb der Aufnahmeöffnung gelagertem Rastelement sind die Vollraststufe und die Vorrastausnehmung am Steckerschaft gebildet. In diesem Fall springt die Vollraststufe gegenüber der Halteflanke der Vorrastausnehmung radial um den erfindungsgemäßen Versatz nach innen in Richtung der Kupplungsmittelachse zurück. Bei der alternativen Ausbildung mit am Steckerschaft gelagertem Rastelement sind die Vollraststufe und die Vorrastausnehmung in der Aufnahmeöffnung des Gehäuseteils gebildet. In diesem Fall springt dann die Vollraststufe gegenüber der Halteflanke der Vorrastausnehmung radial um den erfindungsgemäßen Versatz nach außen von der Kupplungsmittelachse weg zurück.

In vorteilhafter Ausgestaltung ist zwischen der schrägen Übergangsflanke der Vorrastausnehmung und der Vollraststufe eine axial mit konstanter Querschnittskontur verlaufende Übergangsfläche vorgesehen. Im Interesse einer kurzen Gesamt-Baulänge sollte diese axiale Übergangsfläche möglichst kurz gehalten sein.

Weitere vorteilhafte Ausgestaltungsmerkmale der Erfindung sind in den abhängigen Ansprüchen sowie in der folgenden Beschreibung enthalten.

Anhand von in der Zeichnung dargestellten, bevorzugten Ausführungsbeispielen und bestimmten Ausführungsvarianten soll im Folgenden die Erfindung genauer erläutert werden. Dabei zeigen:
- Fig.1: einen Halb-Axialschnitt durch eine erfindungsgemäße Steckkupplung in der Vorraststellung,
- Fig. 2: eine Ansicht analog zu Fig. 1 in der Vollraststellung;
- Fig. 2a u. b: Ausführungsvarianten alternativ zu Fig. 1 in Teilansichten,
- Fig. 3: einen Querschnitt des Steckerteils in der Schnittebene III-III gemäß Fig. 1,
- Fig. 4: eine verkleinerte Draufsicht einer möglichen Ausführung eines Rastelementes für die Ausführung der Steckkupplung gemäß Fig. 1 bis 3,
- Fig. 5: einen Schnitt durch das Rastelement entsprechend der Schnittebene V-V in Fig. 4,
- Fig. 6: eine Ansicht ähnlich Fig. 2 einer weiteren Ausführungsform der erfindungsgemäßen Steckkupplung in der Vollraststellung,
- Fig. 7: einen Schnitt analog zu Fig. 3 in der Ebene VII-VII gemäß Fig. 6 mit Darstellung einer möglichen Ausführung des Rastelementes,
- Fig. 8: eine weitere Ausführungsform der Steckkupplung wiederum im Halb Axialschnitt und in der Vollraststellung analog zu Fig. 2 bzw. Fig. 6.
- Fig. 9: eine Draufsicht einer weiteren Ausführungsform des Rastelementes für die Steckkupplung gemäß Fig. 8,
- Fig. 10: eine weitere alternative Ausführungsform der Steckkupplung wiederum im Halb-Axialschnitt in der Vollraststellung und mit einer zusätzlichen Ausschnittvergrößerung,
- Fig. 11: eine weitere Ausführungsalternative der Steckkupplung im Halbaxialschnitt des Gehäuseteils und nicht geschnittener Halbansicht des Steckerteils und
- Fig. 12: eine Abwandlung der Ausführung gemäß Fig. 11 in einer gleichartigen, aber spiegelverkehrten Darstellung.

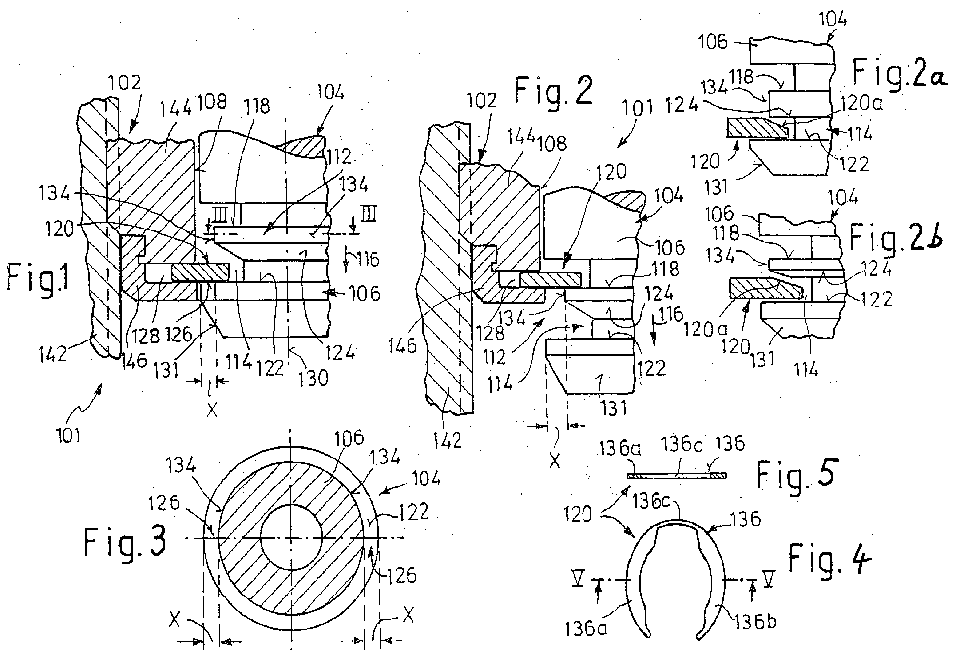

In den Figuren 1 bis 12 der Zeichnung sind gleiche Teile stets mit den gleichen Bezugszeichen versehen und werden daher in der Regel auch jeweils nur einmal beschrieben.

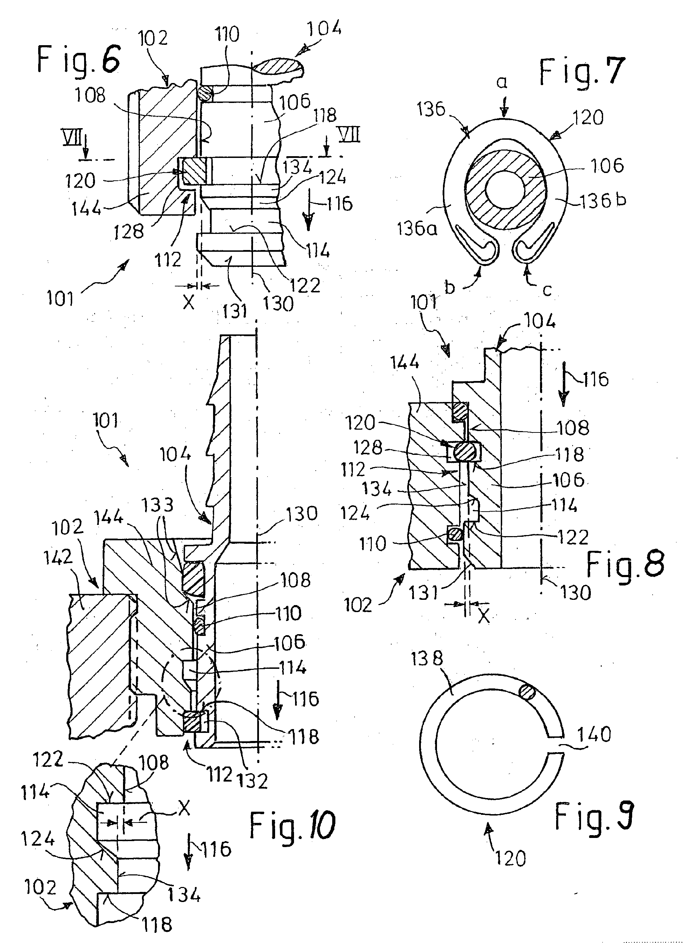

Eine erfindungsgemäße Steckkupplung 101 besteht gemäß Fig. 1 bis 12 aus zwei Kupplungsteilen, und zwar aus einem Gehäuseteil 102 und einem Steckerteil 104. Das Steckerteil 104 ist mit einem Steckerschaft 106 in eine Aufnahmeöffnung 108 des Gehäuseteils 102 einsteckbar und hierbei über mindestens einen Umfangs-Dichtring 110 gegen die Aufnahmeöffnung 108 abgedichtet sowie über eine Verriegelungseinrichtung 112 gegen Lösen arretierbar. Zu dem Dichtring 110 wird auf die Darstellungen in Fig. 6, 8 und 10 bis 12 verwiesen; in Fig. 1 und 2 ist der Dichtring 110 nicht zu erkennen, weil er in einem weggeschnittenen Bereich der Steckkupplung 101 angeordnet ist.

Die Verriegelungseinrichtung 112 ist derart ausgebildet, dass einerseits eine teilgesteckte Vorraststellung (s. Fig. 1) und andereseits eine ganz gesteckte Vollraststellung gewährleistet sind (s. Fig. 2, 6, 8 und 10 bis 12). In der bereits gegen Lösen formschlüssig arretierten Vorraststellung liegt eine derart unvollständige Abdichtung des Steckerschaftes 106 in der Aufnahmeöffnung 108 vor, dass im Falle einer Druckbeaufschlagung mit einem Druckmedium ein Signal, insbesondere ein akustisch wahrnehmbares Leckagegeräusch, erzeugt wird. In der Vollraststellung liegt demgegenüber eine vollständige, druckdichte Abdichtung vor. Bei der unvollständigen Abdichtung in der Vorraststellung handelt es sich um eine definiert begrenzte Undichtigkeit, indem durch eine bestimmte Anordnung des Dichtrings 110 zwischen dem Gehäuseteil 102 und dem Steckerteil 104 bzw. dem Steckerschaft 106 ein Leckagepfad bzw. Drosselspalt gebildet ist, wodurch das Druckmedium, insbesondere Druckluft, dosiert ausströmen und dabei das Leckagegeräusch insbesondere als Pfeifen, Zischen oder dergleichen erzeugen kann. Dies kann dann als Signal dafür gewertet werden, dass noch nicht die korrekt gesteckte Vollraststellung erreicht ist, so dass in diesem Fall ausgehend von der Vorraststellung der Steckerschaft 106 durch weitergehendes Stecken in die Vollraststellung überführt werden kann.

Konstruktiv besteht dazu die Verriegelungseinrichtung 112 einerseits aus einer nutförmigen, radialen Vorrastausnehmung 114 sowie einer in Einsteckrichtung (Pfeil 116) nachgeordneten Vollraststufe 118 des einen Kupplungsteils 102 oder 104 und andererseits aus einem radial federelastischen Rastelement 120 des anderen Kupplungsteils 104 oder 102. Durch diese Ausgestaltung wird erreicht, dass beim Einstecken des Steckerschaftes 106 in die Aufnahmeöffnung 108 das Rastelement 120 durch radiale Bewegung zunächst in der Vorraststellung durch seine Federkraft radial in die Vorrastausnehmung 114 einrastet und dabei eine Halteflanke 122 der Vorrastausnehmung 114 formschlüssig hintergreift. Bei fortgesetztem Einstecken in Pfeilrichtung 116 wird das Rastelement 120 über eine Übergangsflanke 124 der Vorrastausnehmung 114 gegen seine Federkraft radial aus der Vorrastausnehmung 114 verdrängt, bis es in der Vollraststellung die Vollraststufe 118 formschlüssig radial hintergreift. Dies lässt sich insbesondere anhand der beiden Stellungen in Fig. 1 und 2 nachvollziehen.

Wie beispielhaft in Fig. 1 bis 3 sowie Fig. 6 bis 10 dargestellt ist, kann die Halteflanke 122 der Vorrastausnehmung 114 als radiale, zur Kupplungsmittelachse 130 senkrecht ausgerichtete Haltefläche gebildet sein. Entsprechendes gilt vorzugsweise auch für die Vollraststufe 118. Dabei kann die Übergangsflanke 124 der Vorrastausnehmung 114 als eine sich quasi konisch erweiternde Schrägfläche ausgebildet sein. Diese Schrägfläche kann auch im Axialschnitt gesehen leicht konvex (ballig) verlaufen. Beim Überführen von der in Fig. 1 dargestellten Vorraststellung in die Vollraststellung wird das Rastelement 120 über die schräge Übergangsflanke 124 radial aus der Vorrastausnehmung 114 gedrängt.

In einer in Fig. 2a veranschaulichten Ausführungsvariante kann die Übergangsflanke 124 der Vorrastausnehmung 114 auch als radiale, zur Kupplungsmittelachse 130 senkrechte Fläche ausgeführt sein. In diesem Fall weist das Rastelement 120 eine Anfasung oder dergleichen Schrägfläche 120a derart auf, dass über diese Schrägfläche 120a durch Anlage an einer äußeren Begrenzungskante der Übergangsflanke 124 die radiale Verdrängung des Rastelementes 120 aus der Vorrastausnehmung 114 erreicht wird.

In Fig. 2b ist beispielhaft veranschaulicht, dass auch beide Varianten in Kombination vorgesehen sein können. Einerseits ist die Übergangsflanke 124 als Schrägfläche ausgebildet, und andererseits weist das Rastelement 120 die beschriebene Schrägfläche 120a auf.

Wie sich aus Fig. 1 ergibt, ist bereits in der Vorraststellung durch das radiale Einrasten des Rastelementes 120 in die Vorrastausnehmung 114 eine vorteilhaft große radiale Flächen-Überdeckung zwischen dem Rastelement 120 und der Halteflanke 122 gewährleistet, was auch entsprechend hohe Haltekräfte bewirkt. Dies ist deshalb wichtig, weil auch schon in der Vorraststellung eine Beaufschlagung der Steckkupplung mit innerem Systemdruck möglich ist und dabei sichergestellt sein soll, dass es nicht zu einem druckbedingten Lösen des Steckerteils 104 aus der Vorraststellung kommen kann.

Erfindungsgemäß ist nun vorgesehen, dass die Vollraststufe 118 bezüglich ihrer dem Rastelement 120 radial zugewandten Begrenzungskante - zumindest in dem bzw. jedem Eingriffsbereich des Rastelementes 120, vorzugsweise aber rotationssymmetrisch über den ganzen Umfang (kreisförmig) - derart um einen radialen Versatz X gegenüber der entsprechenden Begrenzungskante der Halteflanke 122 der Vorrastausnehmung 114 versetzt ist, dass während der Einsteckbewegung in Pfeilrichtung 116 beim Überführen des Steckerschaftes 106 zwischen Vor- und Vollraststellung - das Rastelement 120 bei seiner radiale Bewegung stets bereichsweise in einem aus dem Versatz X resultierenden Überdeckungsbereich 126 der Halteflanke 122 der Vorrastausnehmung 114 bleibt. Hierzu wird insbesondere auf die Fig. 1 und 3 verwiesen. Demnach sind auf Grund einer beispielhaft in Fig. 4 dargestellten Ausgestaltung des Rastelementes 120 zwei diametral gegenüberliegende Eingriffsbereiche gebildet, in denen jeweils durch den erfindungsgemäßen Versatz X ein Überdeckungsbereich 126 gewährleistet ist.

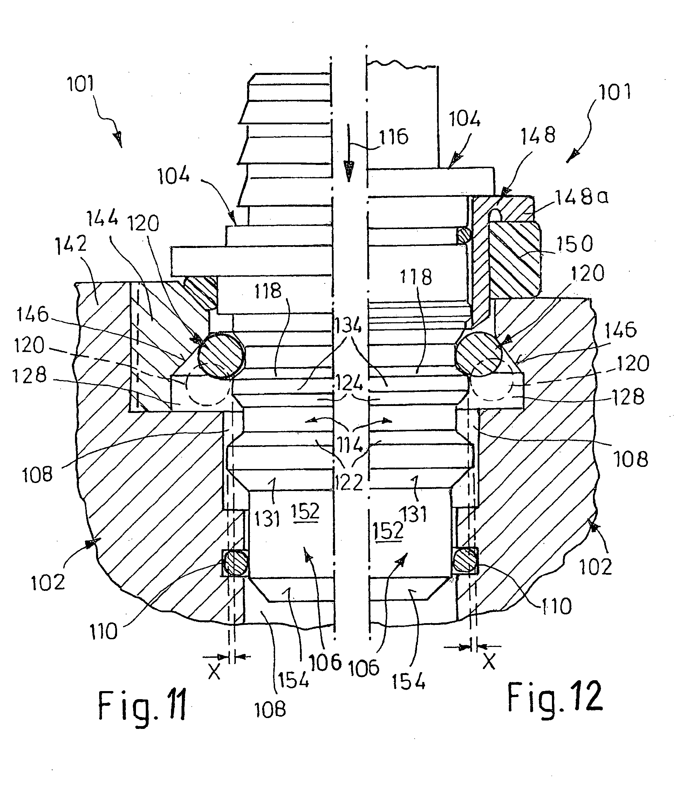

In den drei Ausfuhrungsbeispieten gemäß Fig. 1 bis 9 und auch in den Beispielen nach Fig. 11 und 12 ist das Rastelement 120 innerhalb der Aufnahmeöffnung 108 des Gehäuseteils 102 in einer radialen Nutkammer 128 gelagert. Hierbei sind die Vollraststufe 118 und die Vorrastausnehmung 114 folglich am Steckerschaft 106 gebildet. Deshalb springt die Vollraststufe 118 gegenüber der Halteflanke 122 der Vorrastausnehmung 114 radial um den Versatz X nach innen in Richtung der Kupplungsmittelachse 130 zurück. Beim Einstecken des Steckerschaftes 106 wird das Rastelement 120 über eine Konusfläche 131 des Steckerschaftes 106 radial gegen seine Federkraft gespreizt, bis es in die Vorrastausnehmung 114 und später hinter die Vollraststufe 118 einrastet.

Wie beispielhaft in Fig. 10 dargestellt ist, kann alternativ das Rastelement 120 auch in einer radialen Ringnut 132 am Steckerschaft 106 gelagert sein. Hierbei sind dann die Vollraststufe 118 und die Vorrastausnehmung 114 innerhalb der Aufnahmeöffnung 108 des Gehäuseteils 102 gebildet. Deshalb springt die Vollraststufe 118 gegenüber der Halteflanke 122 der Vorrastausnehmung 114 radial um den Versatz X nach außen von der Kupplungsmittelachse 130 weg zurück. Bei dieser Ausführung wird folglich das Rastelement 120 zusammen mit dem Steckerschaft 106 in die Aufnahmeöffnung 108 eingeführt und dabei zunächst über eine Einführschrägfläche 133 des Gehäuseteils 102 gegen seine Federkraft radial verengt, bis es durch Spreizung in die Vorrastausnehmung 114 und später hinter die Vollraststufe 118 einrastet

Zu den zeichnerischen Darstellungen sei bemerkt, dass der erfindungsgemäße radiale Versatz X stark überhöht veranschaulicht ist; insofern sind die Zeichnungen nicht maßstäblich zu verstehen, sondern der Versatz X ist in Wirklichkeit sehr viel kleiner. Der Versatz X sollte einerseits im Interesse einer guten Haltefunktion mit möglichst großer Flächenüberdeckung zwischen Rastelement 120 und Vollraststufe 118 möglichst klein, dabei aber so groß bemessen sein, dass der Überdeckungsbereich 126 der Halteflanke 122 ebenfalls noch für die beschriebene Sicherungsfunktion hinreichend groß ist. Bei der Auslegung des Versatzes X müssen zudem auch die radialen Federeigenschaften des Rastelementes berücksichtigt werden.

Bezogen auf die radiale Breite der Halteflanke 122 in dem/jedem Eingriffsbereich des Rastelementes 120 bzw. bezogen auf die radiale Tiefe der Vorrastausnehmung 114 sollte der Versatz X etwa im Bereich von 15 % bis maximal 50 % liegen.

Beispielsweise kann bei einer bestimmten Ausführung die Halteflanke 122 einen äußeren Durchmesser von 14,6 mm und einen inneren Durchmesser von 12,5 mm aufweisen. Daraus resultiert eine radiale Breite von 1,05 mm. Hierbei kann der Versatz X beispielsweise 0,2 bis 0,5 mm betragen.

Diese Werte sind lediglich beispielhaft zu verstehen und beschränken die Erfindung nicht.

In den dargestellten Beispielen ist jeweils zwischen der Übergangsflanke 124 der Vorrastausnehmung 114 und der Vollraststufe 118 eine axial mit konstanter Querschnittskontur verlaufende Übergangsfläche 134 angeordnet. Diese Übergangsfläche 134 ist bezüglich ihrer axialen Länge derart ausgebildet, dass einerseits eine hinreichende mechanische Stabilität zur Aufnahme der Haltekräfte über die Vollraststufe 118 gewährleistet ist, andererseits aber auch eine kurze axiale Baulänge erreicht wird.

Für das Rastelement 120 gibt es eigentlich beliebige Ausgestaltungsmöglichkeiten. Beispielsweise kann das Rastelement 120 als elastisch verformbare Federklammer 136 mit zwei im Wesentlichen kreisbogenförmigen Federarmen 136 a, 136b ausgebildet sein. Wie oben bereits erläutert wurde, sind hierdurch zwei diametral gegenüberliegende Eingriffsbereiche gebildet, in denen die Federarme 136a, 136b jeweils mit der Vorrastausnehmung 114 und der Vollraststufe 118 zusammenwirken.

In der Ausführung der Federklammer 136 gemäß Fig. 4 und 5 besteht diese als Stanzformteil aus einem relativ flachen, dünnen Federstahlblech. Vorzugsweise sind dabei die Federarme 136a, 136b über einen in seiner radialen Breite reduzierten und hierdurch ein Gelenk bildenden Steg 136c verbunden.

In der beispielhaft in Fig. 6 und 7 dargestellten Ausführung weist die Federklammer 136 eine größere axiale Dicke auf, so dass zumindest im Bereich der Federarme 136a, 136b ein rechteckiger, insbesondere zumindest angenähert quadratischer Klammerquerschnitt vorgesehen ist. Bevorzugt ist hierbei die Federklammer 136 als Formteil aus Kunststoff ausgebildet.

In weiterer vorteilhafter Ausgestaltung kann das Rastelement 120 bzw. die Federklammer 136 über eine Dreipunktanlage an drei Anlagepunkten a, b und c (s. Fig. 7) relativ zur Kupplungsmittelachse 130 zentriert sein.

Bei dem Ausführungsbeispiel gemäß Fig. 8 und 9 - und auch gemäß Fig. 11 und 12 - ist das Rastelement 120 als Drahtfederring 138 nach Art eines Sprengrings mit vorzugsweise kreisförmigem Ringquerschnitt ausgebildet. Dieser Drahtfederring 138 weist an einer Umfangsstelle eine durchgehende Unterbrechung 140 auf und ist dadurch radial federelastisch verformbar. Der Drahtfederring 138 kann auch einen anderen, z. B. polygonalen, insbesondere quadratischen Ringquerschnitt aufweisen.

In weiterer vorteilhafter Ausgestaltung kann das Gehäuseteil 102 aus mindestens zwei lösbar miteinander verbundenen Teilen bestehen, und zwar aus einem Basisteil 142 und einem in eine Öffnung des Basisteils 142 eingesetzten, im Wesentlichen hohlzylindrischen Einsatzteil 144. Vorzugsweise ist das Einsatzteil 144 als Einschraubteil (Überwurfschraube) ausgebildet und mit einem Außengewinde in ein Innengewinde der Öffnung des Basisteils 142 eingeschraubt. Durch diese Ausgestaltung ist ein Lösen des Steckerteils 102 durch Demontage (Herausschrauben) des Einsatzteils 144 zusammen mit dem verrasteten Steckerschaft 106 und dem Rastelement 120 möglich.

Wie sich noch beispielhaft aus Fig. 1 und 2 ergibt, ist bei dieser Ausführung die Nutkammer 128 für das Rastelement 120 zwischen dem Einsatzteil 144 und einem mit diesem verbundenen Halteteil 146 gebildet. Das Halteteil 146 kann beispielsweise aufgeclipst oder durch Bördeln mit dem Einsatzteil 144 verbunden sein.

Gemäß Fig. 6 ist die Nutkammer 128 durch eine radiale Innenringnut des Einsatzteils 144 gebildet. Entsprechendes gilt auch für die Ausführung gemäß Fig. 8.

Alternativ zu diesen Möglichkeiten kann in einer in Fig. 11 dargestellten Ausführung die Nutkammer 128 für das Rastelement 120 auch zwischen dem Einsatzteil 144 und einer gegenüberliegenden Stufenfläche innerhalb des Basisteils 142 gebildet sein.

Weiterhin ist bei den Ausführungsbeispielen gemäß Fig. 11 und 12 im Unterschied zu den zuvor beschriebenen Ausführungen vorgesehen, dass die Halteflanke 122 der Vorrastausnehmung 114 sowie auch die Vollraststufe 118 jeweils als konusförmige Schrägflächen ausgebildet sind. Ferner weist die das Rastelement 120 aufnehmende Nutkammer 128 auf ihrer zur Mündung der Aufnahmeöffnung 108 weisenden Seite eine konusförmige Schrägfläche 146 auf, die einen zur Mündung hin abnehmenden Innendurchmesser aufweist. Das Rastelement 120 ist nach Art eines Drahtsprengringes ausgebildet und sitzt in den Raststellungen formschlüssig zwischen der Schrägfläche 146 und der Vollraststufe 118 (in der dargestellten Vollraststellung) oder der Halteflanke 122 der Vorrastausnehmung 114 (in der nicht dargestellten Vorraststellung). Bei der Variante gemäß Fig. 11 kann das verrastete Steckerteil 104 gelöst werden, indem das Einsatzteil 144 des zweiteiligen Gehäuseteils 102 aus dem Basisteil 142 entfernt wird. Bei der Variante gemäß Fig. 12 ist ein hülsenförmiges, das Steckerteil 104 umschließendes Löseelement 148 vorgesehen. Dieses Löseelement 148 kann axial in einen Ringspalt zwischen Steckerschaft 106 und Aufnahmeöffnung 108 eingeschoben werden, um das Rastelement 120 im Zusammenwirken mit dem Steckerschaft 106 aus seiner Riegelposition axial und radial in die Nutkammer 128 zu bewegen und so den Steckerschaft 106 freizugeben. Diese Stellung des Rastelementes 120 ist in Fig. 11 und 12 jeweils gestrichelt eingezeichnet. Die axiale Verschiebung des Löseelementes 148 erfolgt vorzugsweise gegen die Federkraft eines Federelementes 150, bei dem es sich um einen Ringkörper aus gummielastischem Material handeln kann, der axial zwischen dem Gehäuseteil 102 und einem Ringkragen 148a des Löseelementes 148 angeordnet ist.

Wie sich weiterhin aus Fig. 11 und 12 ergibt, so weist bei diesen Ausführungen der Steckerschaft 106 im Anschluss an die Konusfläche 131 einen zylindrischen Dichtabschnitt 152 mit einer endseitigen Einführschräge 154 auf. Der Dichtabschnitt 152 wirkt in der dargestellten Vollraststellung mit dem innerhalb des Gehäuseteils 102 in einer Innenringnut gelagerten Dichtring 110 zusammen. In der Vorraststellung ist der Dichtabschnitt 152 axial von dem Dichtring 110 beabstandet, wodurch der oben beschriebene Leckagepfad in der Vorraststellung gebildet ist.

Es sei der Vollständigkeit halber noch erwähnt, dass auch bei den Ausführungen gemäß Fig. 11 und 12 alle vorhandenen Schrägflächen (Konusfläche 131, Halteflanke 122, Übergangsflanke 124 und Vollraststufe 118) auch im Längsschnitt gesehen konvex oder auch konkav gewölbt ausgeführt sein können.

## Patentansprüche

1. Steckkupplung (101) für Druckmittel-Leitungen, bestehend aus zwei Kupplungsteilen (102, 104), einem Gehäuseteil (102) und einem Steckerteil (104), wobei das Steckerteil (104) mit einem Steckerschaft (106) abgedichtet in eine Aufnahmeöffnung (108) des Gehäuseteils (102) einsteckbar und über eine Verriegelungseinrichtung (112) des Steckkupplungs gegen Lösen arretierbar ist, wobei die Verriegelungseinrichtung (112) derart ausgebildet ist, dass eine teilgesteckte Vorraststellung und eine ganz gesteckte Vollraststellung gewährleistet sind, wobei in der Vorraststellung eine unvollständige, eine Leckage des Druckmittels ermöglichende Abdichtung des Steckerschaftes (106) in der Aufnahmeöffnung (108) vorliegt, während in der Vollraststellung eine vollständige Abdichtung gegeben ist, wobei die Verriegelungseinrichtung (112) einerseits aus einer radialen, nutförmigen, von einer Halteflanke (122) und einer Übergangsflanke (124) begrenzten Vorrastausnehmung (114) sowie einer der Übergangsflanke (124) in Einsteckrichtung (116) nachgeordneten Vollraststufe (118) des einen Kupplungsteils (102; 104) und andererseits aus einem radial federelastischen Rastelement (120) des anderen Kupplungsteils (104; 102) besteht, so dass beim Einstecken des Steckerschaftes (106) in die Aufnahmeöffnung (108) das Rastelement (120) durch radiale Bewegung zunächst in der Vorraststellung radial in die Vorrastausnehmung (114) einrastet und dabei die Halteflanke (122) hintergreift und bei fortgesetztem Einstecken über die Übergangsflanke (124) radial aus der Vorrastausnehmung (114) verdrängt und in die die Vollraststufe (118) radial hintergreifende Vollraststellung überführt wird, **dadurch gekennzeichnet, dass** die Vollraststufe (118) zumindest im Eingriffsbereich des Rastelementes (120) derart um einen radialen Versatz (X) gegenüber der Halteflanke (122) der Vorrastausnehmung (114) versetzt ist, dass während der Einsteckbewegung beim Überführen zwischen Vor- und Vollraststellung zwischen dem Rastelement (120) und der Halteflanke (122) der Vorrastausnehmung (114) eine radiale Überdeckung gewährleistet ist.

2. Steckkupplung nach Anspruch 1,
**dadurch gekennzeichnet, dass** die Halteflanke (122) der Vorrastausnehmung (114) und die Vollraststufe (118) entweder als radiale, zur Kupplungsachse (130) senkrechte Flächen oder als Schrägflächen ausgebildet sind.

3. Steckkupplung nach Aspruch 1 oder 2,
**dadurch gekennzeichnet, dass** das Rastelement (120)
- entweder innerhalb der Aufnahmeöffnung (108) des Gehäuseteils (102) gelagert ist und die Vollraststufe (118) und die Vorrastausnehmung (114) am Steckerschaft (106) gebildet sind, wobei die Vollraststufe (118) gegenüber der Halteflanke (122) der Vorrastausnehmung (114) radial um den Versatz (X) nach innen in Richtung der Kupplungsmittelachse (130) versetzt ist,
- oder am Steckerschaft (106) gelagert ist und die Vollraststufe (118) und die Vorrastausnehmung (114) in der Aufnahmeöffnung (108) des Gehäuseteils (102) gebildet sind, wobei die Vollraststufe (118) gegenüber der Halteflanke (122) der Vorrastausnehmung (114) radial um den Versatz (X) nach außen von der Kupplungsmittelachse (130) weg versetzt ist.

4. Steckkupplung nach einem der Ansprüche 1 bis 3,
**dadurch gekennzeichnet, dass** dieÜbergangsflanke(124)
- entweder derart als Schrägfläche ausgebildet ist, dass bei der Einsteckbewegung des Steckerschaftes (106) das Rastelement (120) über die schräge Übergangsflanke (124) aus der Vorrastausnehmung verdrängt wird,
- oder als radiale, zur Kupplungsachse (130) senkrechte Fläche ausgebildet ist, wobei das Rastelement (120) eine Schrägfläche (120a) derart aufweist, dass bei der Einsteckbewegung des Steckerschaftes (106) das Rastelement (120) über die Schrägfläche (120a) aus der Vorrastausnehmung verdrängt wird.

5. Steckkupplung nach einem der Ansprüche 1 bis 4,
**dadurch gekennzeichnet, dass** zwischen der Übergangsflanke (124) der Vorrastausnehmung (114) und der Vollraststufe (118) eine axial mit konstanter Querschnittskontur verlaufende Übergangsfläche (134) angeordnet ist.

6. Steckkupplung nach einem der Ansprüche 1 bis 5,
**dadurch gekennzeichne**t, **dass** das Rastelement (120) als elastische Federklammer (136) mit zwei im Wesentlichen kreisbogenförmigen Federarmen (136a, 136b) ausgebildet ist, die in zwei diametral gegenüberliegenden Eingriffsbereichen mit der Vorrastausnehmung (114) und der Vollraststufe (118) zusammenwirken.

7. Steckkupplung nach Anspruch 6,
**dadurch gekennzeichnet, dass** die Federklammer (136)
- entweder als Formteil aus Kunststoff ausgebildet ist und zumindest im Bereich der Federarme (136a, 136b) einen rechteckigen, insbesondere zumindest angenähert quadratischen Klammerquerschnitt aufweist,
- oder als Stanzteil aus einem Federstahlblech besteht, wobei die Federarme (136a, 136b) über einen in der radialen Breite reduzierten, ein Gelenk bildenden Steg (136c) verbunden sind.

8. Steckkupplung nach einem der Ansprüche 1 bis 5,
**dadurch gekennzeichnet, dass** das Rastelement (120) als Drahtfederring (138) mit vorzugsweise kreisförmigem oder polygonalem Ringquerschnitt ausgebildet ist.

9. Steckkupplung nach einem der Ansprüche 1 bis 8,
**dadurch gekennzeichnet, dass** zur umfangsgemäßen Abdichtung des Steckerschaftes (106) in der Aufnahmeöffnung (108) mindestens ein Dichtring (110) derart am Steckerschaft (106) und/oder in der Aufnahmeöffnung (108) angeordnet ist, dass in der Vorraststellung ein Leckagepfad über den Bereich des Dichtrings (110) gebildet ist, während in der Vollraststellung eine druckdichte Abdichtung durch den Dichtring (110) gewährleistet ist.

10. Steckkupplung nach einem der Ansprüche 1 bis 9,
**dadurch gekennzeichnet, dass** das Gehäuseteil (102) derart aus mindestens zwei lösbar miteinander verbundenen Teilen besteht, und zwar aus einem Basisteil (142) und einem in eine Öffnung des Basisteils (142) eingesetzten, im Wesentlichen hohlzylindrischen Einsatzteil (144), dass das verrastete Steckerteil (104) durch eine Demontage des Einsatzteils (144) lösbar ist.

11. Steckkkupplung nach Anspruch 10,
**dadurch gekennzeichnet, dass** das Einsatzteil (144) als Einschraubteil ausgebildet und mit einem Außengewinde in ein Innengewinde der Öffnung des Basisteils (142) eingeschraubt ist.

12. Steckkupplung nach einem der Ansprüche 1 bis 9,
**gekennzeichnet durch** ein hütsenförmiges Löseetement (148), das zum Lösen des verrasteten Steckerteils (104) derart in einen Ringspalt zwischen Steckerschaft (106) und Aufnahmeöffnung (108) einschiebbar ist, dass das Rastelement (120) aus seiner Verriegelungsposition in eine den Steckerschaft (106) freigebende Freigabeposition überführbar ist.

## Claims

1. Plug-in coupling (101) for pressure-medium lines, consisting of two coupling parts (102, 104), a housing part (102) and a plug part (104), wherein the plug part (104) is able to be plugged in a sealed manner into a receiving opening (108) in the housing part (102) by way of a plug shank (106) and is lockable against detachment via a locking device (112) of the plug-in coupling, wherein the locking device (112) is configured such that a partially plugged-in prelatching position and a fully plugged-in full-latching position are ensured, wherein, in the prelatching position, there is incomplete sealing, allowing a leakage of the pressure medium, of the plug shank (106) in the receiving opening (108), whereas, in the full-latching position, there is complete sealing, wherein the locking device (112) consists on the one hand of a radial groove-like prelatching recess (114), bounded by a retaining flank (122) and a transition flank (124), and of a full-latching step (118), arranged downstream of the transition flank (124) in the plug-in direction (116), of the one coupling part (102; 104) and on the other hand of a radially resilient latching element (120) of the other coupling part (104; 102), such that when the plug shank (106) is plugged into the receiving opening (108), the latching element (120) first of all engages radially in the prelatching recess (114) in the prelatching position by radial movement and in the process engages behind the retaining flank (122), and with continued plugging in, is displaced radially out of the prelatching recess (114) via the transition flank (124) and is guided into the full-latching position engaging radially behind the full-latching step (118),
**characterized in that**, at least in the engagement region of the latching element (120), the full-latching step (118) is offset with respect to the retaining flank (122) of the prelatching recess (114) by a radial offset (X) such that, during the plugging-in movement, in the event of transfer between the pre- and full-latching positions, a radial overlap is ensured between the latching element (120) and the retaining flank (122) of the prelatching recess (114).

2. Plug-in coupling according to Claim 1, **characterized in that** the retaining flank (122) of the prelatching recess (114) and the full-latching step (118) are configured either as radial surfaces perpendicular to the coupling axis (130) or as inclined surfaces.

3. Plug-in coupling according to Claim 1 or 2, **characterized in that** the latching element (120)
- is either mounted inside the receiving opening (108) of the housing part (102) and the full-latching step (118) and the prelatching recess (114) are formed on the plug shank (106), wherein the full-latching step (118) is offset radially inwards in the direction of the coupling central axis (130) with respect to the retaining flank (122) of the prelatching recess (114) by the offset (X),
- or is mounted on the plug shank (106) and the full-latching step (118) and the prelatching recess (114) are formed in the receiving opening (108) of the housing part (102), wherein the full-latching step (118) is offset radially outwards away from the coupling central axis (130) with respect to the retaining flank (122) of the prelatching recess (114) by the offset (X).

4. Plug-in coupling according to one of Claims 1 to 3,
**characterized in that** the transition flank (124)
- is either configured as an inclined surface such that, during the plugging-in movement of the plug shank (106), the latching element (120) is displaced out of the prelatching recess via the inclined transition flank (124),
- or is configured as a radial surface perpendicular to the coupling axis (130), wherein the latching element (120) has an inclined surface (120a) such that during the plugging-in movement of the plug shank (106), the latching element (120) is displaced out of the prelatching recess via the inclined surface (120a).

5. Plug-in coupling according to one of Claims 1 to 4,
**characterized in that** a transition surface (134) that extends axially with a constant cross-sectional profile is arranged between the transition flank (124) of the prelatching recess (114) and the full-latching step (118).

6. Plug-in coupling according to one of Claims 1 to 5,
**characterized in that** the latching element (120) is configured as an elastic spring clip (136) having two substantially circular-arc-shaped spring arms (136a, 136b) which interact with the prelatching recess (114) and the full-latching step (118) in two diametrically opposed engagement regions.

7. Plug-in coupling according to Claim 6, **characterized in that** the spring clip (136)
- is either configured as a plastics moulding and has a rectangular, in particular at least approximately square clip cross section at least in the region of the spring arms (136a, 136b),
- or consists of a punched part made of a springsteel sheet, wherein the spring arms (136a, 136b) are connected via a web (136c) that has a reduced radial width and forms a joint.

8. Plug-in coupling according to one of Claims 1 to 5,
**characterized in that** the latching element (120) is configured as a wire spring washer (138) having a preferably circular or polygonal ring cross section.

9. Plug-in coupling according to one of Claims 1 to 8,
**characterized in that**, in order to circumferentially seal the plug shank (106) in the receiving opening (108), at least one sealing ring (110) is arranged on the plug shank (106) and/or in the receiving opening (108) such that, in the prelatching position, a leakage path via the region of the sealing ring (110) is formed, while in the full-latching position, a pressure-tight seal is ensured by the sealing ring (110).

10. Plug-in coupling according to one of Claims 1 to 9,
**characterized in that** the housing part (102) consists of at least two detachably connected-together parts, specifically of a base part (142) and a substantially hollow-cylindrical insert part (144) inserted into an opening in the base part (142), such that the latched plug part (104) is detachable by removing the insert part (144).

11. Plug-in coupling according to Claim 10,
**characterized in that** the insert part (144) is configured as a screw-in part and is screwed by way of an external thread into an internal thread of the opening in the base part (142).

12. Plug-in coupling according to one of Claims 1 to 9,
**characterized by** a sleeve-like detaching element (148) which, in order to detach the latched plug part (104), is introducible into an annular gap between the plug shank (106) and receiving opening (108) such that the latching element (120) is transferable from its locking position into a releasing position releasing the plug shank (106).

## Revendications

1. Raccord par enfichage (101) pour conduites d'agent sous pression, se composant de deux parties de raccord (102, 104), une partie de boîtier (102) et une partie de fiche (104), dans lequel la partie de fiche (104) peut être engagée de façon étanche avec une tige de fiche (106) dans une ouverture de réception (108) de la partie de boîtier (102) et peut être bloquée contre une séparation du raccord par enfichage au moyen d'un dispositif de verrouillage (112), dans lequel le dispositif de verrouillage (112) est configuré de telle manière qu'une position de pré-encliquetage partiellement engagée et une position d'encliquetage total entièrement engagée soient garanties, dans lequel, dans la position de pré-encliquetage, il existe une étanchéité incomplète de la tige de fiche (106) dans l'ouverture de réception (108), permettant une fuite de l'agent sous pression, tandis que dans la position d'encliquetage total il existe une étanchéité totale, dans lequel le dispositif de verrouillage (112) se compose d'une part d'un évidement de pré-encliquetage (114) limité par un flanc de retenue radial en forme de rainure (122) et par un flanc de transition (124) ainsi que d'un degré d'encliquetage total (118) d'une partie de raccord (102; 104) disposé après le flanc de transition (124) dans la direction d'enfichage (116) et d'autre part d'un élément d'encliquetage (120) radialement élastique de l'autre partie de raccord (104; 102), de telle manière que, lors de l'engagement de la tige de fiche (106) dans l'ouverture de réception (108), l'élément d'encliquetage (120) s'engage par un mouvement radial d'abord dans la position de pré-encliquetage radialement dans l'évidement de pré-encliquetage (114) et s'accroche dès lors derrière le flanc de retenue (122) et, en poursuivant l'engagement au-delà du flanc de transition (124), soit repoussé radialement hors de l'évidement de pré-encliquetage (114) et soit transféré dans la position d'encliquetage total s'accrochant radialement derrière le degré d'encliquetage total (118), **caractérisé en ce que** le degré d'encliquetage total (118) est déplacé, au moins dans la région d'accrochage de l'élément d'encliquetage (120), de telle manière d'un décalage radial (X) par rapport au flanc de retenue (122) de l'évidement de pré-encliquetage (114), que, pendant le mouvement d'engagement lors du passage de la position de pré-encliquetage à la position d'encliquetage total, un recouvrement radial entre l'élément d'encliquetage (120) et le flanc de retenue (122) de l'évidement de pré-encliquetage (114) soit garanti.

2. Raccord par enfichage selon la revendication 1, **caractérisé en ce que** le flanc de retenue (122) de l'évidement de pré-encliquetage (114) et le degré d'encliquetage total (118) sont réalisés soit sous forme de faces radiales perpendiculaires à l'axe du raccord (130) soit sous forme de faces obliques.

3. Raccord par enfichage selon la revendication 1 ou 2, **caractérisé en ce que** l'élément d'encliquetage (120)
- soit est monté à l'intérieur de l'ouverture de réception (108) de la partie de boîtier (102) et le degré d'encliquetage total (118) et l'évidement de pré-encliquetage (114) sont formés sur la tige de fiche (106), dans lequel le degré d'encliquetage total (118) est décalé radialement, par rapport au flanc de retenue (122) de l'évidement de pré-encliquetage (114), du décalage (X) vers l'intérieur en direction de l'axe central du raccord (130),
- soit est monté sur la tige de fiche (106), et le degré d'encliquetage total (118) et l'évidement de pré-encliquetage (114) sont formés dans l'ouverture de réception (108) de la partie de boîtier (102), dans lequel le degré d'encliquetage total (118) est décalé radialement, par rapport au flanc de retenue (122) de l'évidement de pré-encliquetage (114), du décalage (X) vers l'extérieur à l'écart de l'axe central du raccord (130).

4. Raccord par enfichage selon l'une quelconque des revendications 1 à 3, **caractérisé en ce que** le flanc de transition (124)
- soit est réalisé sous forme de face oblique, de telle manière que, lors du mouvement d'engagement de la tige de fiche (106), l'élément d'encliquetage (120) soit repoussé hors de l'évidement de pré-encliquetage par le flanc de transition oblique (124),
- soit est réalisé sous forme de face radiale, perpendiculaire à l'axe du raccord (130), dans lequel l'élément d'encliquetage (120) présente une face oblique (120a), de telle manière que, lors d'un mouvement d'engagement de la tige de fiche (106), l'élément d'encliquetage (120) soit repoussé hors de l'évidement de pré-encliquetage par la face oblique (120a).

5. Raccord par enfichage selon l'une quelconque des revendications 1 à 4, **caractérisé en ce qu'**une face de transition (134) présentant axialement un contour de section transversale constant est disposée entre le flanc de transition (124) de l'évidement de pré-encliquetage (114) et le degré d'encliquetage total (118).

6. Raccord par enfichage selon l'une quelconque des revendications 1 à 5, **caractérisé en ce que** l'élément d'encliquetage (120) est réalisé sous forme d'attache élastique à ressort (136) avec deux bras de ressort (136a, 136b) essentiellement en forme d'arc de cercle, qui coopèrent dans deux régions de prise diamétralement opposées avec l'évidement de pré-encliquetage (114) et le degré d'encliquetage total (118).

7. Raccord par enfichage selon la revendication 6, **caractérisé en ce que** l'attache élastique à ressort (136)
- soit est réalisée sous forme de pièce moulée en matière plastique et présente au moins dans la région des bras de ressort (136a, 136b) une section transversale d'attache rectangulaire, en particulier au moins approximativement carrée,
- soit est réalisée sous forme de pièce estampée en tôle d'acier à ressort, dans lequel les bras de ressort (136a, 136b) sont reliés par une nervure (136c) de largeur réduite, formant une articulation.

8. Raccord par enfichage selon l'une quelconque des revendications 1 à 5, **caractérisé en ce que** l'élément d'encliquetage (120) est réalisé sous forme d'anneau en fil de ressort (138) avec une section transversale de l'anneau de préférence circulaire ou polygonale.

9. Raccord par enfichage selon l'une quelconque des revendications 1 à 8, **caractérisé en ce que**, pour l'étanchéité périphérique de la tige de fiche (106) dans l'ouverture de réception (108), au moins une bague d'étanchéité (110) est disposée sur la tige de fiche (106) et/ou dans l'ouverture de réception (108), de telle manière qu'un chemin de fuite soit formé sur la région de la bague d'étanchéité (110) dans la position de pré-encliquetage tandis qu'une étanchéité résistant à la pression est garantie par la bague d'étanchéité (110) dans la position d'encliquetage total.

10. Raccord par enfichage selon l'une quelconque des revendications 1 à 9, **caractérisé en ce que** la partie de boîtier (102) se compose d'au moins deux parties assemblées l'une à l'autre de façon séparable, notamment une partie de base (142) et une partie d'insert (144) essentiellement cylindrique creuse, insérée dans une ouverture de la partie de base (142), de telle manière que la partie de fiche encliquetée (104) soit séparable par un démontage de la partie d'insert (144).

11. Raccord par enfichage selon la revendication 10, **caractérisé en ce que** la partie d'insert (144) est réalisée sous forme de partie à visser et est vissée avec un filet extérieur dans un filet intérieur de l'ouverture de la partie de base (142).

12. Raccord par enfichage selon l'une quelconque des revendications 1 à 9, **caractérisé par** un élément libre en forme de douille (148), qui peut être inséré dans une fente annulaire entre la tige de fiche (106) et l'ouverture de réception (108) pour la séparation de la partie de fiche encliquetée (104), de telle manière que l'élément d'encliquetage (120) puisse être déplacé de sa position de verrouillage à une position de libération libérant la tige de fiche (106).
